(19) Europäisches Patentamt
European Patent Office
Office européen des brevets

(11) **EP 1 995 217 B1**

(12) **EUROPÄISCHE PATENTSCHRIFT**

(45) Veröffentlichungstag und Bekanntmachung des Hinweises auf die Patenterteilung:
**28.04.2010 Patentblatt 2010/17**

(51) Int Cl.:
**C01G 23/07** (2006.01)     **C04B 35/46** (2006.01)

(21) Anmeldenummer: **07108632.6**

(22) Anmeldetag: **22.05.2007**

(54) **Titandioxid mit erhöhter Sinteraktivität**

Titanium dioxide with increased sinter activity

Oxyde de titane à activité de concrétion améliorée

(84) Benannte Vertragsstaaten:
**AT BE BG CH CY CZ DE DK EE ES FI FR GB GR HU IE IS IT LI LT LU LV MC MT NL PL PT RO SE SI SK TR**

(43) Veröffentlichungstag der Anmeldung:
**26.11.2008 Patentblatt 2008/48**

(73) Patentinhaber: **Evonik Degussa GmbH**
**45128 Essen (DE)**

(72) Erfinder:
• **Schulze-Isfort, Christian**
**63694 Limeshain (DE)**
• **Klotz, Oswin**
**63825 Westerngrund (DE)**
• **Golchert, Rainer**
**64807 Dieburg (DE)**
• **Diener, Uwe**
**63538 Großkrotzenburg (DE)**
• **Schumacher, Kai**
**65719 Hofheim (DE)**

(56) Entgegenhaltungen:
EP-A- 1 683 763        EP-A1- 1 243 555
DE-A1-102004 055 165     US-A1- 2005 214 200

• CHEMICAL ABSTRACTS + INDEXES, AMERICAN CHEMICAL SOCIETY. COLUMBUS, US, Bd. 122, Nr. 7, 3. April 1995 (1995-04-03), XP000662406 ISSN: 0009-2258

**Beschreibung**

Die Erfindung betrifft die Herstellung eines Titandioxidpulvers mit erhöhter Sinteraktivität.

Es ist bekannt, Titandioxid mittels pyrogener Prozesse herzustellen. Unter pyrogenen Prozessen sind Flammenoxidationen oder Flammenhydrolysen zu verstehen. Bei der Flammenoxidation wird ein Titandioxidprecursor, beispielsweise Titantetrachlorid, mittels Sauerstoff gemäß Gl. 1a oxidiert. Bei der Flammenhydrolyse erfolgt die Bildung von Titandioxid durch Hydrolyse des Titandioxidprecursors, wobei das zur Hydrolyse notwendige Wasser aus der Verbrennung eines Brenngases, beispielsweise Wasserstoff, und Sauerstoff stammt (Gl. 1b).

$$TiCl_4 + O_2 \rightarrow TiO_2 + 2\,Cl_2 \qquad \text{(Gl. 1a)}$$

$$TiCl_4 + 2\,H_2O \rightarrow TiO_2 + 4\,HCl \qquad \text{(Gl. 1b)}$$

Das Titandioxid liegt dabei in der Regel in den kristallinen Modifikationen Anatas und Rutil vor. Bei dem im nachfolgend ausgeführten Stand der Technik richtet sich dabei das Hauptaugenmerk auf eine Maximierung des Anatasanteiles.

In WO 96/06803 wird ein Verfahren zur Herstellung von Titandioxid durch eine Kombination von Flammenoxidation und Flammenhydrolyse beschrieben. Dabei werden dampfförmiges Titantetrachlorid und Sauerstoff in einer Reaktionszone vermischt und das Gemisch in einer Flamme erhitzt, welches durch Verbrennung eines Kohlenwasserstoffes als Brenngas erzeugt wird. Es werden Titandioxidpulver mit einem hohen Anteil, bis zu 100%, an der Anatas-Modifikation erhalten.

In Powder Technology 86 (1996) 87-93 wird ein Flammenoxidationsverfahren, welches in einem Diffusionsreaktor durchgeführt wird, offenbart. In einem Bereich von BET-Oberflächen von ca. 40 - 60 $m^2/g$ liegt der Rutil-Anteil bei maximal 6%.

In DE-A-102004055165 wird ein flammenhydrolytisch hergestelltes Titandioxidpulver mit einer BET-Oberfläche von 20 bis 200 $m^2/g$ offenbart. Obwohl bei einer gegebenen Oberfläche das Anatas/Rutil-Verhältnis in einem Bereich von 2:98 bis 98:2 variierbar sein soll, zeigen die Ausführungsbeispiele, dass der Anatas-Anteil deutlich dominiert. Insbesondere in einem Bereich von BET-Oberflächen von ca. 40-50 $m^2/g$ liegt der Anatas-Anteil bei mindestens 71%.

In JP-A-10251021 werden explizit drei durch Flammenoxidation erhältliche Titandioxidpulver mit BET-Oberflächen von 3,2, 28 und 101 $m^2/g$ und einem Rutil-Anteil von entsprechend 97, 32 und 15% offenbart.

US2005/0214200 offenbart u.a. ein mittels Gasphasenreaktion hergestelltes Titandioxid mit einer BET-Oberfläche von 33$m^2/g$ und einem Rutilgehalt von 51%Gew. EP1243555 offenbart u.a. ein mittels Gasphasenreaktion hergestelltes Titandioxid mit einer BET-Oberfläche von 30$m^2/g$ und einem Rutilgehalt von 50%Gew.. In Chemical Abstracts 1995, 122(7), 122:164761 n wird ein mittels plasma-CVD hergestelltes Titandioxid, mit einer BET-Oberfläche von 19-35$m^2/g$ und einem Rutilanteil von 26-65% offenbart.

Der Stand der Technik zeigt das rege Interesse an pyrogen hergestelltem Titandioxid. Aufgrund der Komplexität von pyrogenen Prozessen lassen sich nur wenige Stoffparameter gezielt einstellen.

Titandioxid kann beispielsweise in der keramischen Industrie eingesetzt werden. Hier kann es wünschenswert sein Pulver mit hoher Sinteraktivität einzusetzen.

Aufgabe der vorliegenden Erfindung war es daher ein Verfahren zur Herstellung eines Titandioxidpulver mit hoher Sinteraktivität bereitzustellen.

Der Gegenstand der Erfindung ist ein Verfahren zur Herstellung eines kristallinen Titandioxidpulvers in Form von aggregierten Primärpartikeln mit einer BET-Oberfläche von 30 - 65 $m^2/g$ und einem Rutil-Anteil von 50 - 70% bei dem man

- Dampf von Titantetrachlorid und getrennt hiervon Wasserstoff, Luft oder mit Sauerstoff angereicherte Luft in eine Mischkammer überführt, anschließend
- das Gemisch aus dem Dampf von Titantetrachlorid, Wasserstoff und Primärluft in einem Brenner zündet und die Flamme in eine Reaktionskammer hinein verbrennt,
- anschließend den Feststoff von gasförmigen Stoffen abtrennt,

wobei die Einsatzstoffmengen zum Erzielen der BET-Oberfläche von 30 - 65 $m^2/g$ und des Rutil-Anteiles von 50 - 70% so gewählt sind, dass die Gleichung

```
A = 10^5{[[(TiCl_4 x H_2)/(Luftmenge x Gesamtgas)]/BET]}
```

mit A = 6 - 12

erfüllt ist, und wobei die Einheit von $TiCl_4$, $H_2$, Luftmenge und Gesamtgas kmol/h, die von BET $m^2/g$ und die von A $10^5$ $g/m^2$ ist.

Die Gesamtgasmenge setzt sich zusammen aus Titantetrachlorid, Wasserstoff, Primärluft und gegebenenfalls Sekundärluft.

Das Titantetrachlorid wird vorzugsweise bei Temperaturen von weniger als 200°C verdampft.

Das erfindungsgemäße Verfahren kann auch so ausgeführt werden, dass man zusätzlich zur Primärluft noch Sekundärluft in die Reaktionskammer einbringt. Bei einer solchen Ausführungsform hat es sich als vorteilhaft erwiesen, wenn das Verhältnis Primärluft/Sekundärluft von 10 bis 0,1 beträgt. Besonders bevorzugt ist ein Bereich von 4,5 bis 0,3. Um die Menge an Sekundärluft genau dosieren zu können, ist es erforderlich die Flamme in eine von der Umgebungsluft abgeschlossene Reaktionskammer hinein verbrennen zu lassen. Dadurch gelingt eine genau Prozessführung.

Es ist prinzipiell möglich, das Verfahren so auszuführen, dass die Primärluft und/oder Sekundärluft mit Sauerstoff angereichert ist oder dass die Primärluft und/oder Sekundärluft vorerhitzt sind. Unter "vorerhitzt" ist dabei das Vorerhitzen der Luft auf Temperaturen von 50°C bis 500°C zu verstehen.

Ferner wird die Reaktion vorzugsweise so geführt, dass der Lambda-Wert im Bereich von 1 bis 9 und der Gamma-Wert im Bereich von 1 bis 9 liegt.

Flammenhydrolytisch hergestellte Oxide werden üblicherweise so erhalten, dass die gasförmigen Ausgangsstoffe in einem derartigen stöchiometrischen Verhältnis zueinander stehen, dass der zugeführte Wasserstoff mindestens ausreicht um das vorhandene Chlorid aus $TiCl_4$ zu HCl abzureagieren. Die hierfür benötigte Menge an Wasserstoff wird als stöchiometrische Wasserstoffmenge bezeichnet.

Das Verhältnis von dem zugeführten zu dem soeben definierten stöchiometrisch erforderlichen Wasserstoff wird als Gamma bezeichnet. Es bedeutet demnach:

$$\text{Gamma} = \quad H_2 \text{ eingespeist (Mol)}/H_2 \text{ stöchiometrisch (Mol)}.$$

Bei flammenhydrolytisch hergestellten Oxiden wird weiterhin üblicherweise eine Sauerstoffmenge (beispielsweise aus der Luft) eingesetzt, die mindestens ausreicht um $TiCl_4$ in Titandioxid zu überführen und eventuell noch vorhandenen überschüssigen Wasserstoff zu Wasser umzusetzen. Diese Sauerstoffmenge wird als stöchiometrische Sauerstoffmenge bezeichnet.

Analog wird das Verhältnis von zugeführtem Sauerstoff zum stöchiometrisch benötigten Sauerstoff als Lambda bezeichnet. Es bedeutet demnach:

$$\text{Lambda} = \quad O_2 \text{ eingespeist (Mol)}/O_2 \text{ stöchiometrisch (Mol)}.$$

Nach der Abtrennung von gasförmigen Stoffen kann das Titandioxidpulver vorzugsweise mit Wasserdampf behandelt werden. Diese Behandlung dient in erster Linie chloridhaltige Gruppen von der Oberfläche zu entfernen. Gleichzeitig reduziert diese Behandlung die Anzahl von Agglomeraten. Das Verfahren kann kontinuierlich so ausgeführt werden, dass das Pulver mit Wasserdampf, gegebenenfalls zusammen mit Luft, im Gleich- oder Gegenstrom behandelt wird. Die Temperatur bei der die Behandlung mit Wasserdampf erfolgt, beträgt zwischen 250 und 750°C, wobei Werte von 450 bis 550°C bevorzugt sind.

Das nach dem erfindungsgemäßen Verfahren erhaltene kristalline Titandioxidpulver liegt in Form von aggregierten Primärpartikeln mit einer BET-Oberfläche von 30 - 65 $m^2/g$ und einem Rutil-Anteil von 50 - 70% vor.

Der Rutil-Anteil ist der Prozentsatz der Summe der kristallinen Modifikationen Rutil und Anatas, die zusammen 100% ergeben. Der Rutil-Anteil kann bevorzugt 55 bis 65% sein.

Die BET-Oberfläche des Titandioxidpulvers kann bevorzugt bei 35 bis 60 $m^2/g$ und besonders bevorzugt 40 bis 55 $m^2/g$ sein.

In Röntgendiffaktogrammen des Titandioxidpulvers sind außer Rutil und Anatas in der Regel keine weiteren kristallinen Modifikationen detektierbar.

Unter Primärpartikel werden im Sinne der Erfindung Partikel verstanden, die zunächst in der Reaktion gebildet, und im weiteren Reaktionsverlauf zu Aggregaten zusammenwachsen können.

Unter Aggregat im Sinne der Erfindung sind miteinander verwachsene Primärpartikel ähnlicher Struktur und Größe zu verstehen, deren Oberfläche kleiner ist, als die Summe der einzelnen, isolierten Primärpartikel. Mehrere Aggregate oder auch einzelne Primärpartikel können sich weiter zu Agglomeraten zusammenfinden. Aggregate oder Primärpartikel liegen dabei punktförmig aneinander. Agglomerate können jeweils in Abhängigkeit von ihrem Verwachsungsgrad durch Energieeintrag wieder zerlegt werden.

Der Anteil von Aggregaten und/oder Agglomeraten mit einem Durchmesser von mehr als 45 μm des Titandioxidpulvers liegt in einem Bereich von 0,0001 bis 0,05 Gew.-%. Bevorzugt kann ein Bereich von 0,001 bis 0,01 Gew.-% und besonders bevorzugt ein Bereich von 0,002 bis 0,005 Gew.-% sein.

Das Titandioxidpulver kann Reste von Chlorid enthalten. Der Gehalt an Chlorid ist bevorzugt kleiner als 0,1 Gew.-%. Besonders bevorzugt kann ein Titandioxidpulver mit einem Chloridgehalt im Bereich von 0,01 bis 0,05 Gew.-% sein.

Die Stampfdichte des Titandioxidpulvers ist nicht limitiert. Es hat sich jedoch als vorteilhaft erwiesen, wenn die Stampfdichte Werte von 20 bis 200 g/l. Besonders bevorzugt kann eine Stampfdichte von 30 bis 120 g/l sein.

**Beispiele**

Analytik

Die BET-Oberfläche wird nach DIN 66131 bestimmt.

Die Stampfdichte wird in Anlehnung an DIN ISO 787/XI K 5101/18 (nicht gesiebt) bestimmt.

Die Schüttdichte wurde bestimmt nach DIN-ISO 787/XI.

Der pH-Wert wird in Anlehnung an DIN ISO 787/IX, ASTM D 1280, JIS K 5101/24 bestimmt.

Der Anteil der Partikel größer als 45 μm wird bestimmt nach DIN ISO 787/XVIII, JIS K 5101/20

Bestimmung des Chlorid-Gehaltes: Ca. 0,3 g der erfindungsgemäßen Partikel werden genau eingewogen, mit 20 ml 20 prozentiger Natronlauge p.a. versetzt, gelöst und unter Rühren in 15 ml gekühlte $HNO_3$ überführt. Der Chlorid-Anteil in der Lösung wird mit $AgNO_3$-Lösung (0,1 mol/l oder 0,01 mol/1) titriert.

Beispiel 1 (gemäß Erfindung)

0,042 kmol/h $TiCl_4$-Dampf werden in eine Mischkammer überführt. Getrennt hiervon werden 0,19 kmol/h Wasserstoff und 0,683 kmol/h Primärluft in die Mischkammer eingebracht. Das Reaktionsgemisch wird einem Brenner zugeführt und gezündet. Dabei brennt die Flamme in ein wassergekühltes Flammrohr. Zusätzlich werden in den Reaktionsraum 0,892 kmol/h Sekundärluft eingebracht. Das entstandene Pulver wird in einem nachgeschalteten Filter abgeschieden und anschließend im Gegenstrom mit Luft und Wasserdampf bei 520°C behandelt.

Aus den Einsatzstoffmengen berechnet sich der Faktor A zu 8,2 g/m$^2$. Das Titandioxidpulver weist eine BET-Oberfläche von 34 m$^2$/g und einen Rutil-Anteil von 54% auf.

Die erfindungsgemäßen Beispiele 2 bis 7 werden analog durchgeführt. Einsatzstoffmengen und BET-Oberfläche und Rutil-Gehalt der erhaltenen Pulver sind in der Tabelle wiedergegeben.

Die Vergleichsbeispiele C1 bis C10 werden ebenfalls analog Beispiel 1 durchgeführt, jedoch sind die Einsatzstoffmengen so gewählt, dass der Faktor A außerhalb des erfindungsgemäßen Bereiches liegt. Die resultierenden Titandioxidpulver weisen BET-Oberflächen und Rutil-Gehalte auf, die außerhalb des erfindungsgemäßen Bereiches liegen. C11 und C12 stellen kommerziell erhältliche TitandioxidPulver dar. C11 ist Aeroxide® TiO$_2$ P25, C12 ist Aeroxide® VP TiO$_2$ P90, beide Degussa.

Die Titandioxidpulver aus den erfindungsgemäßen Beispielen 1 und 2 wurden hinsichtlich ihrer Sinteraktivität mit den Pulvern aus den Vergleichsbeispielen C4 und C5, die vergleichbare BET-Oberflächen aufweisen, verglichen. Dabei zeigt sich am Prozentsatz an Verlust der BET-Oberfläche die deutlich höhere Sinteraktivität der Titandioxidpulver aus den Beispielen 1 und 2.

**Tabelle: Einsatzstoffmengen, BET-Oberfläche und Rutil-Gehalt der erhaltenen Titandioxidpulver**

| Beispiel | $TiCl_4$ | $H_2$ | Luft | | | $O_2$ Gesamt | Gesamt-gas | gamma | lambda | A | Rutil | BET | BET** |
| | | | Primär | Sekundär | Gesamt | | | | | | | | |
| | kmol/h | kmol/h | kmol/h | kmol/h | kmol/h | kmol/h | kmol/h | | | $g/m^2$ | % | $m^2/g$ | % |
| **1** | 0,042 | 0,19 | 0,683 | 0,892 | 1,575 | 0,331 | 1,81 | 2,25 | 1,51 | 8,2 | 54 | 34 | 62 |
| **2** | 0,042 | 0,127 | 0,446 | 0,803 | 1,249 | 0,262 | 1,42 | 1,51 | 1,47 | 8,9 | 57 | 34 | - |
| **3** | 0,042 | 0,19 | 0,455 | 0,803 | 1,258 | 0,264 | 1,49 | 2,25 | 1,01 | 11,2 | 66 | 38 | 66 |
| **4** | 0,042 | 0,127 | 0,306 | 0,803 | 1,109 | 0,233 | 1,28 | 1,51 | 1,01 | 10,8 | 65 | 35 | - |
| **5** | 2,53 | 14,28 | 62,46 | 15,17 | 77,63 | 16,302 | 94,44 | 2,82 | 1,84 | 11,0 | 50 | 45 | - |
| **6** | 0,137 | 0,962 | 2,76 | 1,76 | 4,52 | 0,949 | 5,62 | 3,5 | 1,2 | 8,8 | 65 | 59 | - |
| **7** | 0,137 | 0,962 | 2,76 | 2,71 | 5,47 | 1,149 | 6,57 | 3,5 | 1,2 | 6,1 | 45 | 60 | - |
| **C1** | 1,92 | 6,1 | 47,12 | 15,53 | 62,65 | 13,157 | 70,67 | 1,59 | 3,27 | 5,2 | 16 | 51 | - |
| **C2** | 1,92 | 5,43 | 47,46 | 15,53 | 62,99 | 13,228 | 70,34 | 1,41 | 3,68 | 4,6 | 12 | 51 | - |
| **C3** | 1,92 | 6,1 | 48,15 | 22,51 | 70,66 | 14,839 | 78,68 | 1,59 | 3,31 | 4,2 | 15 | 50 | - |
| **C4** | 0,0079 | 0,067 | 0,161 | 0,419 | 0,58 | 0,122 | 0,65 | 4,24 | 1,01 | 4,5 | 26 | 31 | 35 |
| **C5** | 0,0053 | 0,067 | 0,12 | 0,419 | 0,539 | 0,113 | 0,61 | 6,35 | 0,76 | 4,0 | 8 | 27 | 33 |
| **C6** | 0,137 | 1,885 | 15,951 | 5,8 | 21,751 | 4,568 | 23,77 | 6,88 | 3,55 | 0,5 | 7 | 91 | - |
| **C7** | 0,0066 | 0,027 | 0,223 | 0,535 | 0,758 | 0,159 | 0,79 | 2,03 | 3,5 | 0,4 | 20 | 77 | - |
| **C8** | 0,0066 | 0,02 | 0,21 | 0,535 | 0,745 | 0,156 | 0,77 | 1,49 | 4,49 | 0,3 | 14 | 75 | - |
| **C9** | 0,0032 | 0,022 | 0,24 | 0,535 | 0,775 | 0,163 | 0,80 | 3,46 | 4,52 | 0,1 | 11 | 102 | - |
| **C10*** | 1,92 | 6,54 | 48,41 | 15,23 | 63,64 | 13,364 | 72,10 | 1,7 | 3,1 | 5,4 | 23 | 51 | |
| **C11*** | 0,137 | 2,07 | 20,35 | 4,9 | 25,25 | 5,303 | 27,46 | 7,56 | 4,1 | 0,5 | 5 | 90 | - |
| C10: Aeroxide® $TiO_2$ P25, C11: Aeroxide® $TiO_2$ VP P90; **800°C/3h | | | | | | | | | | | | | |

**Patentansprüche**

1. Verfahren zur Herstellung eines kristallinen Titandioxidpulvers in Form von aggregierten Primärpartikeln mit einer BET-Oberfläche von 30 - 65 m$^2$/g und einem Rutil-Anteil von 50 - 70% bei dem man

    - Dampf von Titantetrachlorid und getrennt hiervon Wasserstoff, Luft oder mit Sauerstoff angereicherte Luft in eine Mischkammer überführt, anschließend
    - das Gemisch aus dem Dampf von Titantetrachlorid, Wasserstoff und Primärluft in einem Brenner zündet und die Flamme in eine Reaktionskammer hinein verbrennt,
    - anschließend den Feststoff von gasförmigen Stoffen abtrennt,

    wobei die Einsatzstoffmengen zum Erzielen der BET-Oberfläche von 30 - 65 m$^2$/g und des Rutil-Anteiles von 50 - 70% so gewählt sind, dass die Gleichung

    $$A = 10^5\{[(TiCl_4 \times H_2)/(Luftmenge \times Gesamtgas)]/BET]\}$$

    mit A = 6 - 12
    erfüllt ist, und wobei die Einheit von TiCl$_4$, H$_2$, Luftmenge und Gesamtgas kmol/h, die von BET m$^2$/g und die von A 10$^5$ g/m$^2$ ist.

**Claims**

1. Process for preparing a crystalline titanium dioxide powder in the form of aggregated primary particles having a BET surface area of 30-65 m$^2$/g and a rutile content of 50-70%, wherein

    - titanium tetrachloride vapour and, separately therefrom, hydrogen, air or oxygen-enriched air are introduced into a mixing chamber,
    - the mixture of titanium tetrachloride vapour, hydrogen and primary air is subsequently ignited in a burner and the flame is burned into a reaction chamber,
    - the solid is subsequently separated off from gaseous substances,

    where the amounts used to achieve the BET surface area of 30-65 m$^2$/g and the rutile content of 50-70% are selected so that the equation

    $$A = 10^5\{[(TiCl_4 \times H_2)/(amount~of~air \times total~gas)]/BET]\}$$

    where A = 6-12
    is obeyed and the unit of TiCl$_4$, H$_2$, amount of air and total gas is kmol/h, that of BET is m$^2$/g and that of A is 10$^5$ g/m$^2$.

**Revendications**

1. Procédé pour la préparation d'une poudre de dioxyde de titane cristallin sous forme de particules primaires agrégées ayant une surface BET de 30 - 65 m$^2$/g et une teneur en rutile de 50 - 70 %, dans lequel

    - on envoie dans une chambre de mélange de la vapeur de tétrachlorure de titane et, séparément de celle-ci, de l'hydrogène, de l'air ou de l'air enrichi avec de l'oxygène, ensuite
    - on allume dans un brûleur le mélange constitué de la vapeur de tétrachlorure de titane, d'hydrogène et d'air primaire et on fait brûler la flamme dans une chambre de réaction,
    - ensuite on sépare la matière solide d'avec les substances gazeuses,

    les quantités de substances introduites pour l'obtention de la surface BET de 30 - 65 m$^2$/g et de la teneur en rutile de 50 - 70 % étant choisies de manière à satisfaire à l'équation

$$A = 10^5\{[(TiCl_4 \times H_2)/(\text{quantité d'air} \times \text{gaz total})]/BET]\}$$

où A = 6 -12,
et l'unité de $TiCl_4$, $H_2$ de la quantité d'air et du gaz total étant kmole/h, celle de BET étant $m^2/g$ et celle de A étant $10^5$ $g/m^2$.

**IN DER BESCHREIBUNG AUFGEFÜHRTE DOKUMENTE**

**In der Beschreibung aufgeführte Patentdokumente**

- WO 9606803 A
- DE 102004055165 A
- JP 10251021 A
- US 20050214200 A
- EP 1243555 A

**In der Beschreibung aufgeführte Nicht-Patentliteratur**

- *Powder Technology,* 1996, vol. 86, 87-93
- *Chemical Abstracts,* 1995, vol. 122 (7), 164761